(19) **Europäisches Patentamt European Patent Office Office européen des brevets**

(11) **EP 3 852 961 B1**

(12) **EUROPEAN PATENT SPECIFICATION**

(45) Date of publication and mention of the grant of the patent:
**24.05.2023   Bulletin 2023/21**

(21) Application number: **19783109.2**

(22) Date of filing: **23.08.2019**

(51) International Patent Classification (IPC):
***B23D 61/02*** *(2006.01)*

(52) Cooperative Patent Classification (CPC):
**B23D 61/025**

(86) International application number:
**PCT/IB2019/057111**

(87) International publication number:
**WO 2020/058788 (26.03.2020 Gazette 2020/13)**

(54) **CIRCULAR SAW BLADE WITH A GROOVED BODY AND METHOD OF MAKING THE SAME**

KREISSÄGEBLATT MIT EINEM GENUTETEN KÖRPER UND VERFAHREN ZUR HERSTELLUNG DAVON

SCIE CIRCULAIRE AVEC CORPS PRÉSENTANT DES SILLONS ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:   **21.09.2018   PL 42715818**

(43) Date of publication of application:
**28.07.2021   Bulletin 2021/30**

(73) Proprietor: **ASPI Sp. z o.o. Sp. K.**
**16-400 Suwalki (PL)**

(72) Inventors:
• **SZYSZKOWSKI, Stanisław**
**16-400 Suwałki (PL)**

• **SZYSZKOWSKI, Walerian**
**Saskatoon, SK S7J 4Y6 (CA)**
• **SZYSZKOWSKI, Piotr**
**16-400 Suwa ki (PL)**

(74) Representative: **Karcz, Katarzyna**
**Karcz Zakrocka Rzecznicy Patentowi sp.p.**
**Ul. E Orzeszkowej 14/3**
**02-374 Warszawa (PL)**

(56) References cited:
**EP-A1- 0 144 468      DE-A1- 2 703 825**
**GB-A- 2 361 884      JP-A- H1 071 522**
**JP-A- H08 118 306      JP-A- H10 235 601**
**JP-A- 2000 225 571**

**Description**

The invention relates to a method of making a circular saw blade according to the preamble of claim 1, and a circular saw blade according to the preamble of claim 9.

Such a method and such a circular saw blade are known from DE 27 03 825 A1.

Circular saw blades are multi-tooth cutting tools designed for cutting diverse materials, in particular metals, light alloys, plastics, wood and woodgrain materials, depending on the type of the saw blade.

Uniform and stepped thickness multi-tooth circular saw blades are commonly used for cutting diverse materials. The simplest example of such saw blades is an uniform thin disc having teeth cut out along its circumference. Such saw blades operate in specific conditions. If a saw blade is too thick the amount of the processed material (kerf loss) and energy consumption are increased which is disadvantageous. However, in view of the forces generated during the cutting and the required quality of the cut surfaces, the saw blade may not be too thin because its stiffness would be too low. Considering the above, as well as in view of varying transversal loads and the fact that the circular saw blade operates in a narrow slit (kerf) of the cut material, the design of the saw blade should be precisely adjusted to the requirements of a specific cutting process.

The main factor affecting the quality of the cut surfaces (or the cutting process performance) is the effective transversal stiffness of a blade (ETS), i.e. the transversal stiffness near the external rim of the blade (ERB) during its operation. The transversal stiffness of a blade should be understood as its stiffness in a direction perpendicular to the plane of the blade. The ETS of an operating blade near the ERB depends on its static bending stiffness and on the level of hoop stresses in this area (stress stiffness).

The rotational hoop stresses, i.e. resulting from the rotation of the blade and centrifugal forces are positive (tensile), while the thermal hoop stresses, i.e. resulting from the temperature gradient caused by the heat generated in the cutting process are negative (compressive) .

Generally, the magnitude of rotational stresses and the thermal stresses depend on the rotational velocity of the blade and its diameter, thickness and the material the blade is made of as well as on the feed speed of the material being cut, the diameter of the clamping discs, the geometry and number of teeth, the size of additional openings, such as noise dampening openings, cooling openings, compensation openings, cleaning openings etc.

Considering the sign of the each stress, the increase of the rotational stresses increases the ETS, while the increase of the thermal stresses reduces the ETS. In particular, in an uniform thickness blade (i.e. an isotropic blade having the same radial and hoop stiffness in the plane of the blade) the rotational stresses in the ERB area are several times lower than those near the internal edge of the blade, while the thermal stresses are the highest in the ERB area. Consequently, in the ERB area the resultant stresses (low rotational stresses and high thermal stresses) are usually such that additional pre-tension of the blade in this area is necessary in order to ensure a required ETS.

Conventionally, in order to improve the performance of a circular saw blade, the body of the blade is pre-tensioned so that initial tensile hoop stresses are induced near the external rim of the blade and compressive stresses are generated in the central ring. Such a distribution of the initial stresses in the blade counterbalances, at least in part, the compressive thermal stresses arising during the cutting. The pre-tension may be induced by various procedures, e. g. mechanical or thermal, known in the industry. However, these procedures are rather difficult and laborious.

Another disadvantage of the pre-tensioning is that its effect is not permanent-the pre-tension must be monitored and possible losses of tension must be repaired (i.e. the pre-tensioning must be restored).

One of the reasons that the performance of the cutting process may deteriorate is that wood chips are incorrectly removed from the slit formed in the material during the cutting. It happens when only a part of the formed wood chips is thrown outside. The rest of the wood chips remains in the slit and travels between the teeth to the blade body which results in additional friction causing an increase of the blade temperature, in particular in the ERB area. Additionally to lowering the quality and precision of the cut surfaces, it also reduces durability of the blade. In order to improve the efficiency of chip removal, openings of diverse shapes and sizes are provided in saw blade designs.

Basing on computer analyses and numerous experiments, the inventors have established that introduction of grooves having specific geometry and arrangement into the body of a circular saw blade enables controlling the level of the rotational stresses and the thermal stresses in the saw blade. Namely, these inventive grooves significantly reduce the radial stiffness (RS) and slightly reduce the hoop stiffness (HS) in the plane of the saw blade.

The introduction of the inventive grooves results in the circular saw blade becoming orthotropic with the ratio RS / HS being reduced. The reduction of the RS / HS causes in turn the high rotational stresses to be shifted from the internal edge of the blade towards the external rim thereof (to the ERB area). Simultaneously, the thermal stresses are reduced and in consequence the resultant stresses in the ERB area are increased. The computer simulations performed by the inventors have showed that when the RS is about 20% or less than the HS, then the sum of the rotational and thermal stresses in the ERB area reaches a level that makes pre-tensioning not necessary, meaning that the introduction of the inventive grooves completely replaces the pre-tensioning procedures.

The inventive grooves, designed mainly to increase the hoop stresses in the ERB area, also improve the effectiveness of the wood chips removal. As the side surfaces of the saw blade are also increased because of the grooves, heat dissipation from the cutting operation area is improved too.

In view of the above, a method of making a circular saw blade is provided, wherein a circular saw blade comprising a body having circumferential cutting teeth is provided, the method including grooving the saw blade body, wherein grooves are formed on both sides of the body said grooves having a substantially rectangular cross sectional shape, and wherein said grooves have a depth smaller than the thickness of the saw blade body and extend in a direction different from the radial direction of the circular saw blade, said grooves being comprised in evenly distributed angular grooved sections covering at least a part of each surface of the body in which grooved sections each radial cross-section of the body comprises at least two grooves, each of said two grooves being located on a different side of the body, so that each groove on one side is located in a part of the body that is free of the grooves on the opposite side of the body, wherein the distance ($t_2$) between the edges of the neighboring grooves located on the opposite sides of the body is not less than the dimension ($t_1$) that is equal to the thickness (t) of the body (2) minus the depth (g) of the groove.

Preferably, the angular grooved sections formed on the same side of the body sum up to a 360° angle.

The grooves formed in the body of the circular saw blade preferably have in a surface plan view the shape of rings and/or fragments of rings concentric with the circular saw blade.

The grooves formed in the body of the circular saw blade may have in a surface plan view the shape of sections of rings non-concentric with the circular saw blade.

Preferably, the grooves formed in the body of the circular saw blade have in a surface plan view the shape of straight stripes extending along the sides of at least one polygon having its center coincident with the center of the circular saw blade.

Preferably, the grooves are formed on the area of the body of the circular saw blade that is located between 0,5 and 0,8 of its radius.

Preferably, the formed grooves have a depth equal to about half the thickness of the body.

Preferably, the neighboring angular grooved sections comprising the grooves having in a surface plan view the shape of sections of rings or the shape of straight stripes overlap on the angular areas covering an angle of at least 3°.

According to the invention a circular saw blade is also provided comprising a body having circumferential cutting teeth, wherein the body of the circular saw blade comprises grooves having a substantially rectangular cross sectional shape and having a depth smaller than the thickness of the saw blade body and extending in a direction different from the radial direction of the circular saw blade, said grooves being comprised in evenly distributed angular grooved sections covering at least a part of each surface of the body, in which grooved sections each radial cross-section of the body comprises at least two grooves, each of said two grooves being located on a different side of the body, so that each groove on one side is located in a part of the body that is free of the grooves on the opposite side of the body, wherein the distance ($t_2$) between the edges of the neighboring grooves located on the opposite sides of the body is not less than the dimension ($t_1$) that is equal to the thickness (t) of the body (2) minus the depth (g) of the groove.

Preferably, the angular grooved sections on the same side of the body sum up to a 360° angle.

The body of the circular saw blade preferably comprises the grooves having in a surface plan view the shape of rings and/or sections of rings concentric with the saw blade.

The body of the circular saw blade may comprise the grooves having in a surface plan view the shape of sections of rings non-concentric with the saw blade.

In another variant, the body of the circular saw blade may comprise the grooves having in a surface plan view the shape of straight stripes extending along the sides of at least one polygon having its center coincident with the center of the circular saw blade.

Preferably, the grooves are formed on an area of the body of the circular saw blade that is located between 0,5 and 0,8 of its radius.

The depth of the grooves preferably equals about half the thickness of the body.

Preferably, the neighboring angular grooved sections, comprising the grooves having in a surface plan view the shape of sections of rings or the shape of straight stripes, overlap on the angular areas covering an angle of at least 3°.

The grooving of the saw blade body by the method according to the invention contributes to the improvement of the saw blade and its performance. According to the invention the grooves are arranged in such a way that the radial cross-sectional profile of the body acquires somewhat wave-like shape, which is because the grooves are located alternately on both sides of the body, at least over a part thereof.

Consequently, the radial stiffness of the body is reduced which results in the increase of the hoop rotational (tensile) stresses and the reduction of the hoop thermal (compressive) stresses during the operation of the saw blade. Hence, the resultant hoop stresses are increased and stiffen the saw blade in the transversal direction (the ETS is increased).

Physically, the above phenomenon may be explained as follows: both the low rotational (tensile) stresses and the high thermal (compressive) stresses in the ERB area of an isotropic (conventional) circular saw blade result from disadvantageous blocking of the blade deformations in the radial direction. This ERB area is being heated during the blade operation and it undergoes relatively greater centrifugal forces. The less the radial stiffness of the saw blade, the less it is blocked. As a consequence, the hoop stresses are higher in said area.

Therefore, the introduction of the grooves according to the invention in a circular saw blade results in that the body, when undergoing the radial tension caused by the thermal stresses during the operation of the blade, yields to such tension i.e. it extends radially slightly more than do conventional saw blades without the inventive grooves. For this reason, directions of the said grooves are different from the radial direction, in particular they have the perpendicular direction or a direction that is substantially perpendicular to the radial direction.

An important feature of the invention is that the increase of the hoop stresses in the ERB area (resulting from the increase of the tensile rotational stresses and the reduction of the compressive thermal stresses) and the consequent increase of the effective transversal stiffness occur during the operation of the saw blade. These effects are permanent during the life of the saw blade, i.e. they do not disappear with time and usage of the saw blade. The durability of said effects is due to the permanent existence of the grooves and not to the induced pre-tension that relaxes with time.

Additionally, it has been observed that the grooves in a circular saw blade according to the invention contribute to the reduction of noise during the operation of the blade, and importantly - because of an additional space formed by the grooves - to a better removal of wood chips from the slit in the cut material. The better removal of the wood chips contributes in turn to a more effective dissipation of heat in the working area of the cut material, and hence to the reduction of the thermal stresses.

The circular saw blade according to the invention is shown in preferred embodiments in the drawing, in which:

Fig. 1 shows the geometry of the grooves made in the plane of the circular saw blade according to a first embodiment of the invention;

Fig. 2 shows the geometry of the grooves made in the plane of the circular saw blade according to a second embodiment of the invention;

Fig. 3 shows the geometry of the grooves made in the plane of the circular saw blade according to a third embodiment of the invention;

Fig. 4 shows the geometry of the grooves made in the plane of the circular saw blade according to a fourth embodiment of the invention;

Fig. 5 shows the geometry of the grooves made in the plane of the circular saw blade according to a fifth embodiment of the invention;

Fig. 6 shows the geometry of the grooves made in the plane of the circular saw blade according to a sixth embodiment of the invention;

Fig. 7 shows the geometry of the grooves made in the plane of the circular saw blade according to a seventh embodiment of the invention;

Figs. 8-12 show the geometries of the grooves made in the plane of the circular saw blade according to next four embodiments of the invention;

Fig. 13 shows the cross-section of the grooves of the circular saw blade according to the invention, the grooves having a preferred shape and dimension proportions.

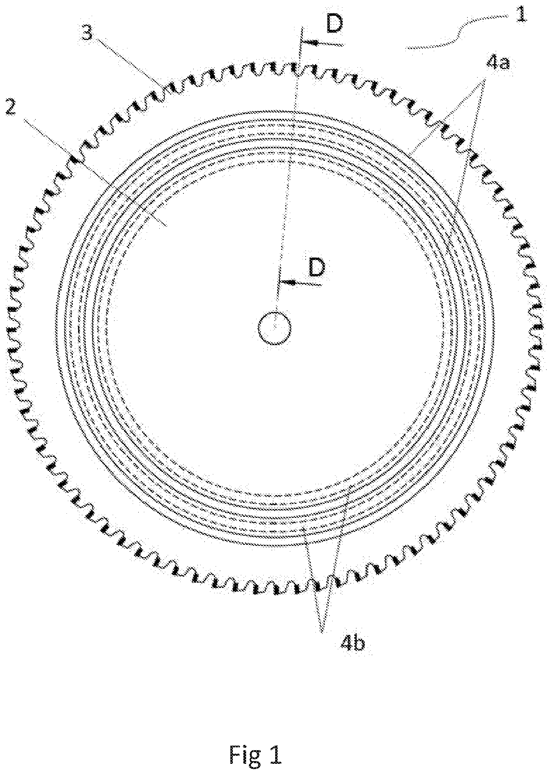

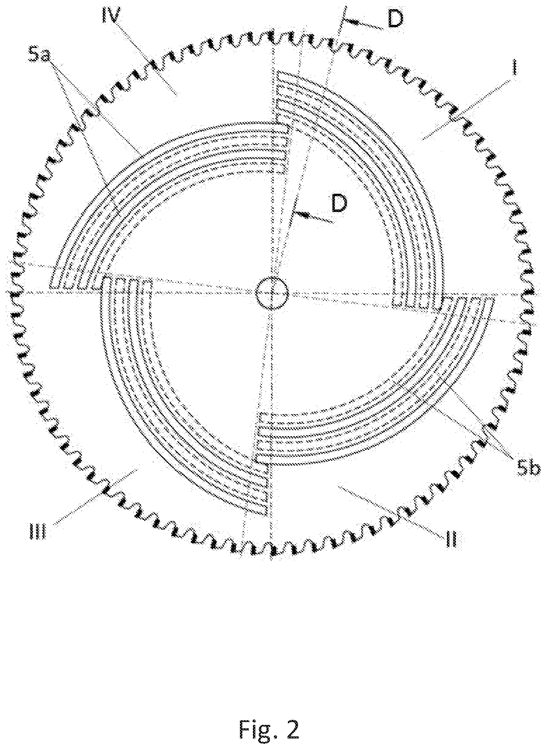

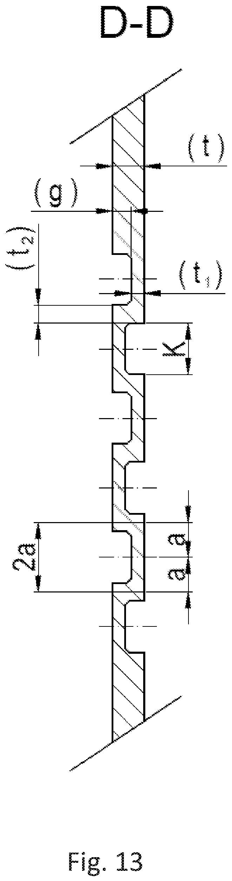

The circular saw blade 1 having a body 2 and circumferential teeth 3 shown in fig. 1 is an exemplary saw blade according to the invention. As shown in fig. 1, two annular concentric grooves, respectively 4a and 4b, are provided on each respective side of the body 2 (the grooves 4b on the invisible side of the body 2 have been indicated by dashed lines). In this first embodiment of the invention the grooved angular sections I, II, III, IV (see fig. 2) sum up to 360°, so that the grooves run around the whole disc. The grooves 4a and 4b are arranged in such a way that there are four grooves in each radial cross-section of the body, each groove being located in the area of the body which is free of the grooves on the other side of the body. A preferred example of the shape of the grooves is shown in fig. 13.

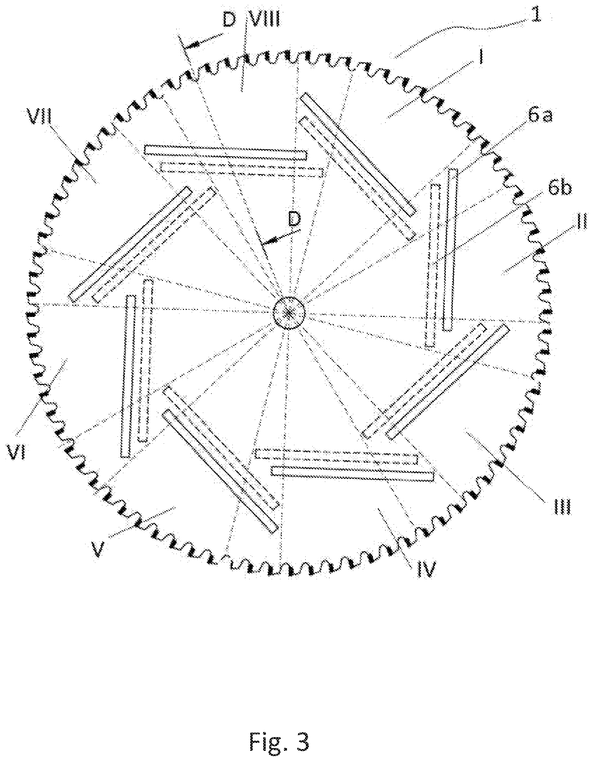

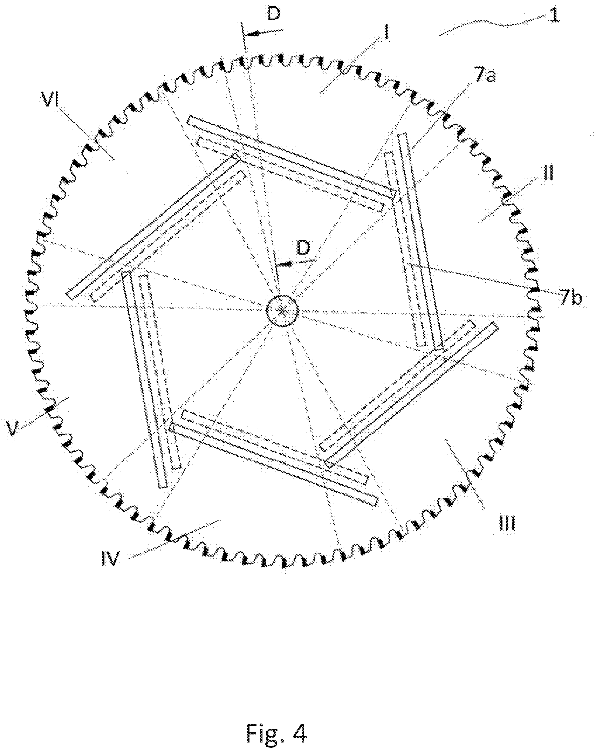

Fig. 2 shows the geometry of the grooves of the circular saw blade 1 according to a second embodiment of the invention. In this embodiment eight grooves, respectively 5a and 5b, are provided on each respective side of the body 2. The grooves 5a, 5b are arranged in such a way that there are four grooved angular sections I, II, III, IV (indicated by dashed lines) evenly distributed on each side of the body. In each radial cross-section of these sections there are four grooves. In the remaining angular sections of the body, there may be more grooves, e.g. eight grooves. In this embodiment each groove has the shape (in plan view) of a fragment of an annulus that is not concentric with the body 2. As in the case of the embodiment of fig. 1, a preferred example of the shape of the grooves is shown in fig. 13 Figs. 3 and 4 show a third and a fourth embodiment respectively of the saw blade 1 according to the invention. In these two embodiments the body 2 of the saw blade 1 comprises the grooves 6a, 6b and 7a, 7b respectively, the grooves having the shape in plan view of straight stripes extending along the sides of the polygon having its center coincident with the center of the circular saw blade 1. In these two embodiments there are eight sections I-VIII on each side of the saw blade 1 (fig. 3) and six sections I-VI on each side of the saw blade 1 (fig. 4).

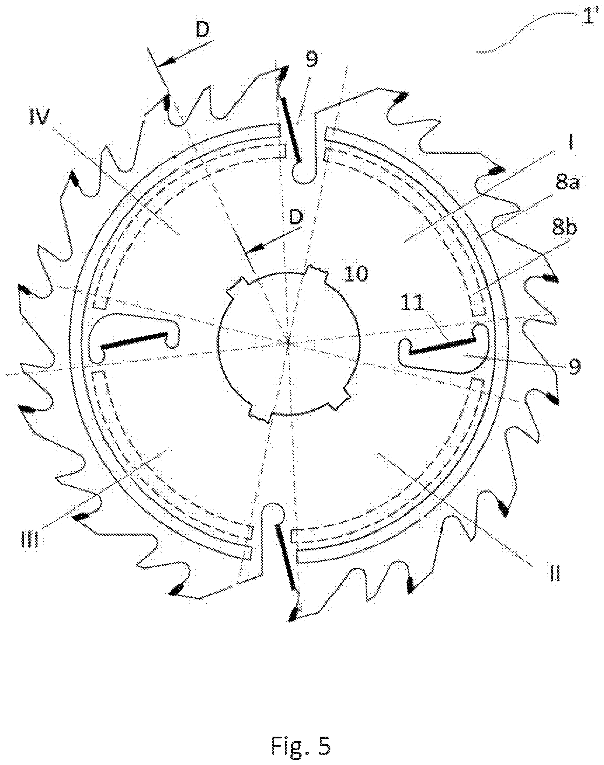

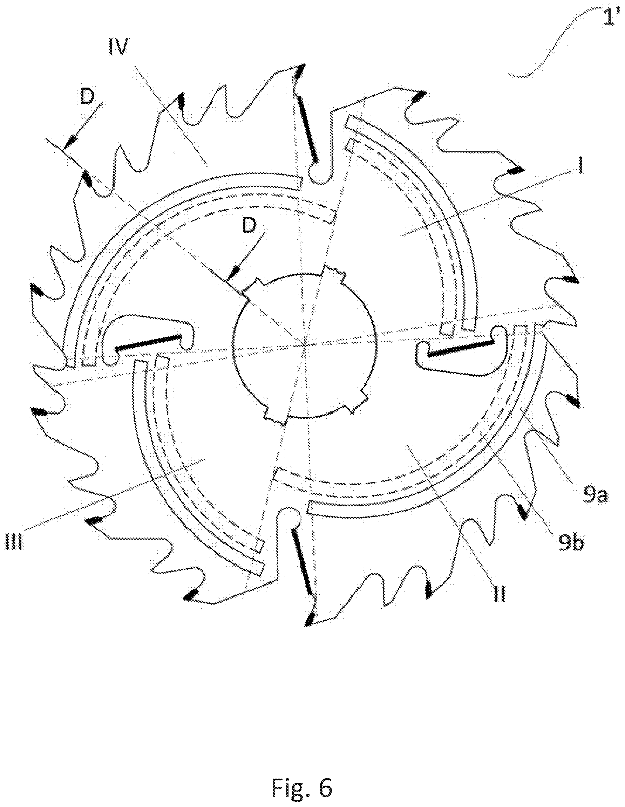

Figs. 5, 6 show two variants of an exemplary saw blade 1', here a wood saw blade, according to the invention.

In these two variants the angular sections I, II, III, IV in which there are two rooves 8a and 8b ( 9a and 9b in fig. 6) in each radial cross-section, the grooves bypass the cleaning openings 9. In the saw blade 1' shown in figs. 5, 6 two types of openings are shown, i.e. a central clamping opening 10 and incisions for the cleaning openings 9 having side blades 11. In the embodiments shown in figs. 5 and 6, in each angular section I, II, III, IV of the body 2 there is one groove, respectively 8a and 8b on each side of the body 2, the grooves having the shape of a fragment of an annulus.

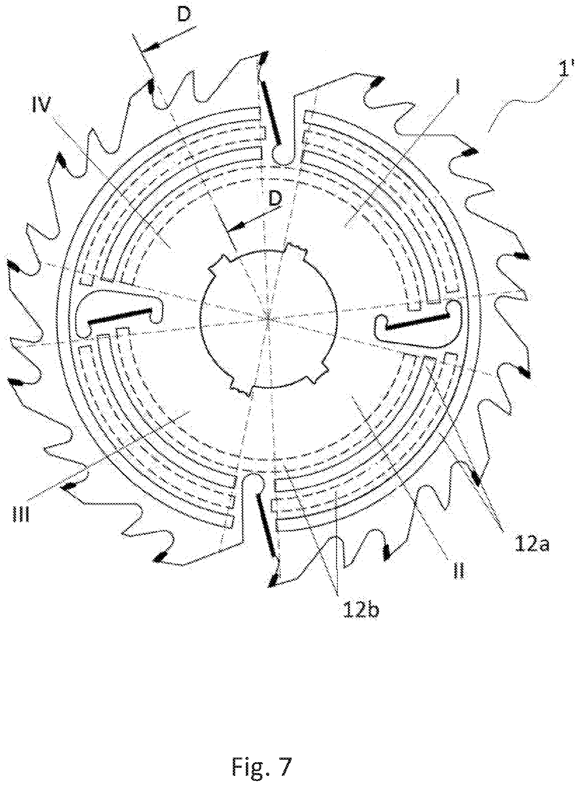

Fig. 7 shows another variant similar to those of figs. 5 and 6, but in this case the annular sections I, II, III, IV have four grooves 12a and 12b in each radial cross-section.

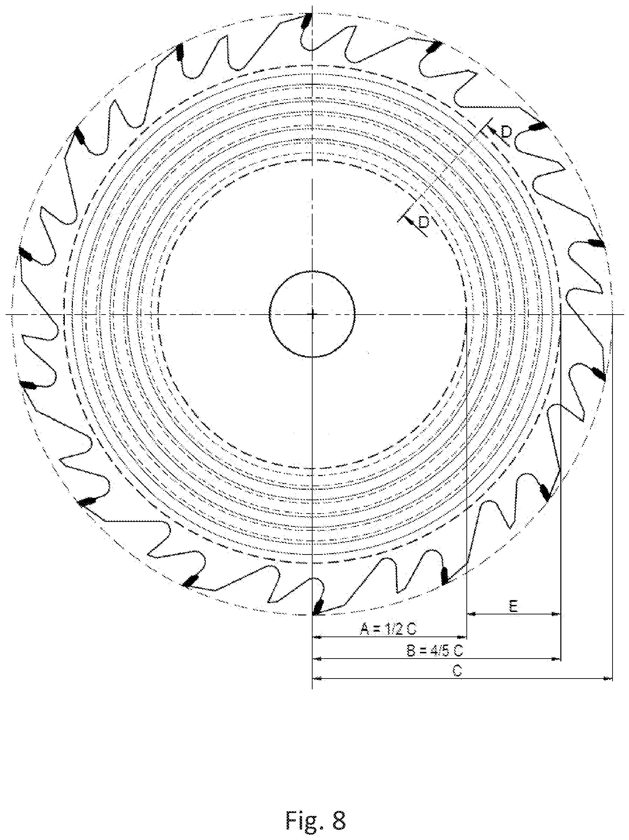

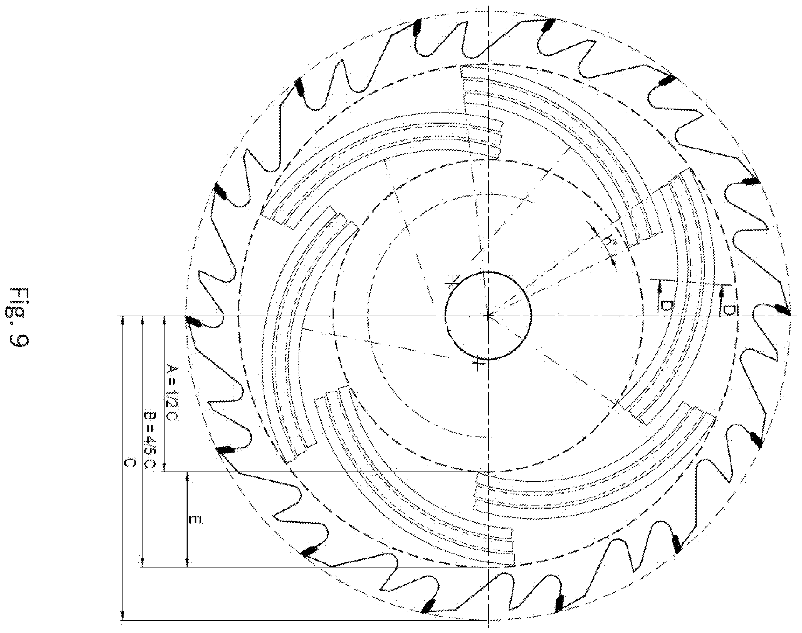

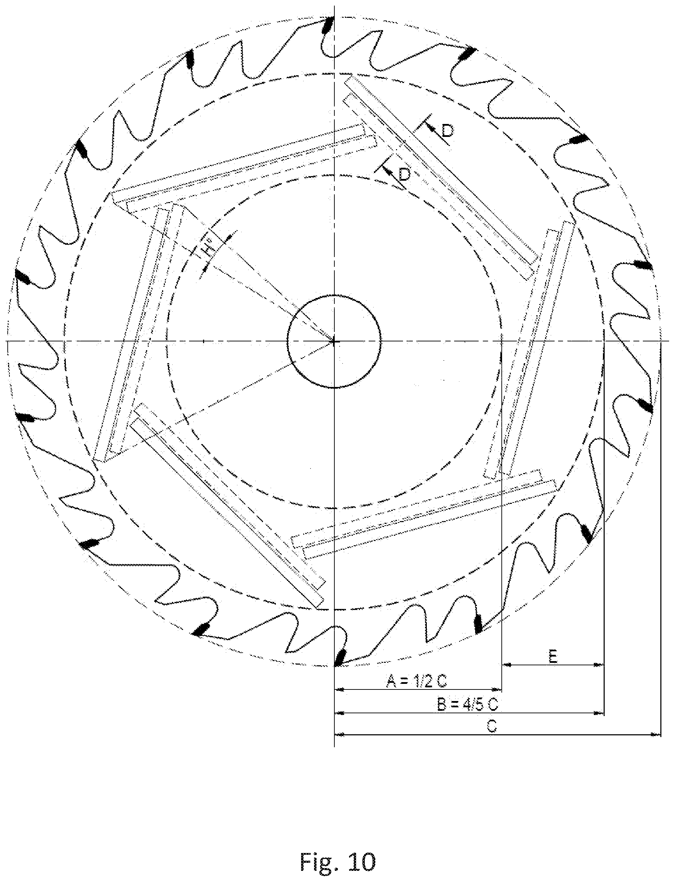

Other preferred embodiments of the circular saw blade according to the invention are shown in figs. 8 to 10. In the embodiments shown in figs. 8 to 10 the grooves are arranged in the area having a width E and they are located between two radiuses A and B, the radius A being equal to about 0,5 C and the radius B being equal to about 0,8 C, where C is the radius of the saw blade. Said area has been defined basing on experiments and the aforementioned calculations and numerical analysis.

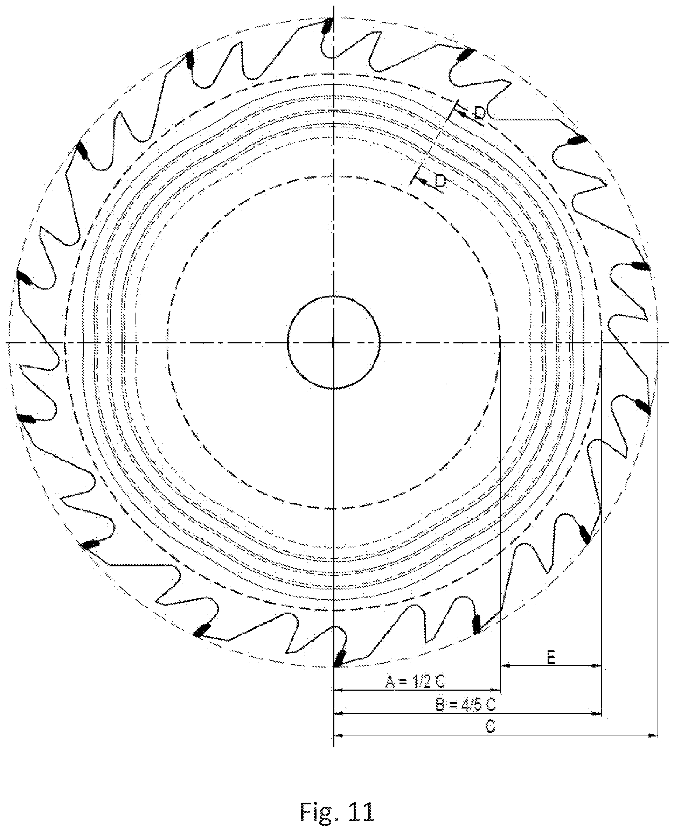

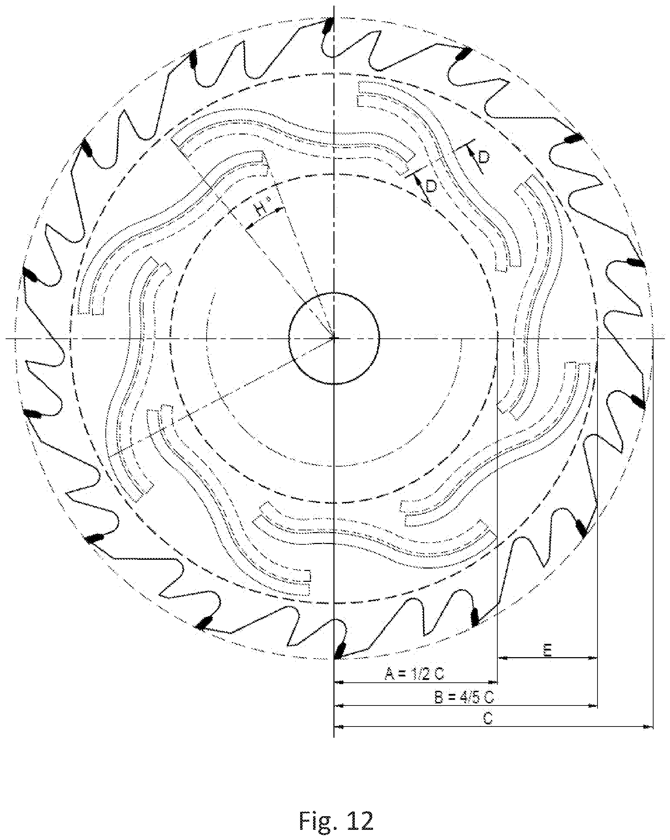

In figs. 8-10 the shapes of the grooves are analogical to those shown in figs. 1-4. On the other hand figs. 11 and 12 show alternative shapes of grooves that may be made in the saw blade according to the invention. These alternative grooves have a curved trajectory, their cross-sections and dimensions being preferably as shown in fig. 13.

In all the described embodiments the number of the grooves is preferably from 2 to 6.

The circular saw blades according to the invention may be of diverse types and may have different shapes of teeth. They may also have additional openings for cleaning etc. as shown in the appended figures.

Fig. 13 shows an example of a fragment of the cross-section D-D of saw blades according to the invention that has the grooves of a particularly advantageous rectangular or substantially rectangular shape. The body of the saw blade has a thickness $t$, the grooves have a depth $g$ and a width K. the thickness $t_1$ of the bottom of the grooves constitutes the difference of the dimensions $t$ and $g$. In fig. 13 a dimension $t_2$ is also shown constituting the distance between the edges of the grooves neighboring on the opposite sides of the body. As mentioned above, in terms of the ETS a particularly advantageous effect has been obtained when $t_2$ is no less then $t_1$, while $t_1 \approx 0,5t$ i.e. $t_1$ equals about half the thickness of the body.

As mentioned above, the computer simulations performed by the inventors have showed that when the RS is about 20% or less of the HS, then the resultant of the rotational and thermal stresses in the ERB area reaches a level at which pre-tensioning is not necessary, meaning that introduction of the inventive grooves may totally replace the pre-tensioning procedures. In order to meet the above requirement (20% or less of the HS), the width 2a in fig. 13 must be selected adequately to the dimensions $t$, $t_1$ and $t_2$, namely:

$$a \leq 0.5t_2 X \quad \text{or} \quad \frac{2a}{t_2} \leq X$$

where X is a positive root of the below quadratic equation:

$$X^2[3(\frac{t-t_1}{t_1})^2 - 4] + X\{(\frac{t-t_1}{t_2})^3 + \frac{t-t_1}{t_1}[1+3(\frac{t-t_1}{t_1})^2]\} + \frac{t-t_1}{t_1}(\frac{t-t_1}{t_2})^3 = 0$$

The shapes and dimension proportions of the grooves as indicated in the example shown in fig. 13 may be applied in all the embodiments of the saw blade according to the invention described herein.

In a preferred but not limiting embodiment of the invention, the dimensions of the grooves may be e.g. the following:

- the thickness of the body $t$ = 2,8 mm
- the depth of the groove $g$ = 1,4 mm
- the distance between the edges of the grooves $t_2$ = 1,8 mm
- the difference of the dimensions $t$ and $g$, $t_1$ = 1,4 mm
- the width of the groove K = 4,0 mm
- the distance 2a = 5,8 mm.

Hence, the method according to the invention involves making the suitably arranged grooves in the body 2 of a circular saw blade. The grooves may be made by means of any suitable technology known in the industry, e.g. by milling the grooves using an end mill, turning using a turning tool, by polishing or by other e.g. laser methods.

The characterizing feature of the method according to the invention is arranging the grooves in the saw blade body so as to give a wave-like profile to the radial cross-sections of the body of the saw blade. In consequence, the body has lower radial stiffness during operation and higher effective transversal stiffness, as explained earlier, which constitutes an important improvement in comparison to the prior state of the art.

**Claims**

1. A method of making a circular saw blade, the circular saw blade comprising a body having circumferential cutting teeth, the method including grooving the saw blade body, wherein grooves (4a, 4b; 5a, 5b; 6a, 6b; 7a, 7b; 8a, 8b; 9a, 9b; 10a, 10b; 12a, 12b) are formed on both sides of the body (2) said grooves having a substantially rectangular cross sectional shape, and wherein said grooves have a depth (g) smaller than the thickness (t) of the saw blade body (2) and extend in a direction different from the radial direction of the circular saw blade, said grooves being comprised in evenly distributed angular grooved sections (I, II, III, IV, VI, VII, VIII) covering at least a part of each surface of the body, in which grooved sections each radial cross-section (A-A) of the body comprises at least two grooves (4a, 4b; 5a, 5b; 6a, 6b; 7a, 7b; 8a, 8b; 9a, 9b; 10a, 10b; 12a, 12b), each of said two grooves being located on a different side of the body, so that each groove (4a, 4b; 5a, 5b; 6a, 6b; 7a, 7b; 8a, 8b; 9a, 9b; 10a, 10b; 12a, 12b) on one side is located in a part of the body (2) that is free of the grooves on the opposite side of the body, **characterized in that** the distance ($t_2$) between the edges of the neighboring grooves located on the opposite sides of the body is not less than the dimension ($t_1$) that is equal to the thickness (t) of the body (2) minus the depth (g) of the groove.

2. The method according to claim 1, **characterized in that** the angular grooved sections formed on the same side of the body sum up to a 360° angle.

3. The method according to claim 1, **characterized in that** the grooves (8a, 8b; 12a, 12b) formed in the body (2) of the circular saw blade (1, 1') have in a surface plan view the shape of rings and/or fragments of rings concentric with the circular saw blade (1, 1').

4. The method according to claim 1, **characterized in that** the grooves (9a, 9b) formed in the body (2) of the circular saw blade (1, 1') have in a surface plan view the shape of sections of rings non-concentric with the circular saw blade.

5. The method according to claim 1, **characterized in that** the grooves (6a, 6b; 7a, 7b) formed in the body (2) of the circular saw blade (1, 1') have in a surface plan view the shape of straight stripes extending along the sides of at least one polygon having its center coincident with the center of the circular saw blade (1, 1').

6. The method according to any of claims from 1 to 5, **characterized in that** the grooves (4a, 4b; 5a, 5b; 6a, 6b; 7a, 7b; 8a, 8b; 9a, 9b; 10a, 10b; 12a, 12b) are formed on the area of the body (2) of the circular saw blade (1, 1') that is located between 0,5 and 0,8 of its radius.

7. The method according to claim 1, **characterized in that** the grooves are formed having a depth (g) equaling about half the thickness (t) of the body (2).

8. The method according to claim 1 or 4 or 5, **characterized in that** the neighboring angular grooved sections (I, II, III, IV, VI, VII, VIII) comprising the grooves (9a, 9b) or the grooves (6a, 6b; 7a, 7b) overlap on the angular areas covering an angle of at least 3°.

9. A circular saw blade comprising a body having circumferential cutting teeth, wherein the body (2) of the circular saw blade (1, 1') comprises grooves (4a, 4b; 5a, 5b; 6a, 6b; 7a, 7b; 8a, 8b; 9a, 9b; 10a, 10b; 12a, 12b) having a substantially rectangular cross sectional shape and having a depth (g) smaller than the thickness (t) of the saw blade body (2) and extending in a direction different from the radial direction of the circular saw blade, said grooves being comprised in evenly distributed angular grooved sections (I, II, III, IV, VI, VII, VIII) covering at least a part of each surface of the body, in which grooved sections each radial cross-section (A-A) of the body comprises at least two grooves (4a, 4b; 5a, 5b; 6a, 6b; 7a, 7b; 8a, 8b; 9a, 9b; 10a, 10b; 12a, 12b), each of said two grooves being located on a different side of the body, so that each groove (4a, 4b; 5a, 5b; 6a, 6b; 7a, 7b; 8a, 8b; 9a, 9b; 10a, 10b; 12a, 12b) on one side is located in a part of the body (2) that is free of the grooves on the opposite side of the body, **characterized in that** the distance ($t_2$) between the edges of the neighboring grooves located on the opposite sides of the body is not less than the dimension ($t_1$) that is equal to the thickness (t) of the body (2) minus the depth (g) of the groove.

10. The saw circular blade according to claim 9, **characterized in that** the angular grooved sections on the same side of the body sum up to a 360° angle.

11. The circular saw blade according to claim 9, **characterized in that** the body (2) of the circular saw blade (1, 1') comprises the grooves (8a, 8b; 12a, 12b) having in a surface plan view the shape of rings and/or sections of rings concentric with the saw blade (1, 1').

12. The circular saw blade according to claim 9, **characterized in that** the body (2) of the circular saw blade (1, 1') comprises the grooves (9a, 9b) having in a surface plan view the shape of sections of rings non-concentric with the saw blade.

13. The circular saw blade according to claim 9, **characterized in that** the body (2) of the circular saw blade (1, 1') comprises the grooves (6a, 6b; 7a, 7b) having in a surface plan view the shape of straight stripes extending along the sides of at least one polygon having its center coincident with the center of the circular saw blade (1, 1').

14. The circular saw blade according to any of claims from 9 to 13, **characterized in that** the grooves (4a, 4b; 5a, 5b; 6a, 6b; 7a, 7b; 8a, 8b; 9a, 9b; 10a, 10b; 12a, 12b) are formed on an area of the body (2) of the circular saw blade (1, 1') that is located between 0,5 and 0,8 of its radius (C).

15. The circular saw blade according to claim 9, **characterized in that** the depth (g) of the grooves equals about half the thickness (t) of the body (2).

16. The circular saw blade according to claim 9 or 12 or 13, **characterized in that** the neighboring angular grooved sections (I, II, III, IV, VI, VII, VIII) comprising the grooves (9a, 9b) or the grooves (6a, 6b; 7a, 7b) overlap on the angular areas covering an angle of at least 3°.


**Patentansprüche**

1. Verfahren zur Herstellung eines Kreissägeblattes, wobei das Kreissägeblatt einen Körper mit umfangseitigen Schneidzähnen enthält, wobei das Verfahren das Nuten des Sägeblattkörpers einschließt, wobei Nuten (4a, 4b; 5a, 5b; 6a, 6b; 7a, 7b; 8a, 8b; 9a, 9b; 10a, 10b; 12a, 12b) auf beiden Seiten des Körpers (2) ausgebildet sind, wobei die Nuten eine im Wesentlichen rechteckige Querschnittsform aufweisen, und wobei die Nuten eine Tiefe (g) aufweisen, die kleiner ist als die Dicke (t) des Sägeblattkörpers (2), und sich in einer von der radialen Richtung des Kreissägeblattes verschiedenen Richtung erstrecken, wobei die Nuten in gleichmäßig verteilten, mit Nuten versehenen Winkelabschnitten (I, II, III, IV, VI, VII, VIII) enthalten sind, die mindestens einen Teil jeder Fläche des Körpers bedecken, wobei in den mit Nuten versehenen Abschnitten jeder radiale Querschnitt (A-A) des Körpers mindestens zwei Nuten (4a, 4b; 5a, 5b; 6a, 6b; 7a, 7b; 8a, 8b; 9a, 9b; 10a, 10b; 12a, 12b) enthält, wobei jede der beiden Nuten auf einer anderen Seite des Körpers angeordnet ist, sodass jede Nut (4a, 4b; 5a, 5b; 6a, 6b; 7a, 7b; 8a, 8b; 9a, 9b; 10a, 10b; 12a, 12b) auf einer Seite in einem Teil des Körpers (2) angeordnet ist, der frei von den Nuten auf der gegenüberliegenden Seite des Körpers ist,
**dadurch gekennzeichnet, dass**
der Abstand (t$_2$) zwischen den Rändern der benachbarten Nuten, die auf den gegenüberliegenden Seiten des Körpers angeordnet sind, nicht kleiner ist als die Abmessung (t$_1$), die gleich der Dicke (t) des Körpers (2) minus der Tiefe (g) der Nut ist.

2. Verfahren nach Anspruch 1, **dadurch gekennzeichnet, dass** die mit Nuten versehenen Winkelabschnitte auf derselben Seite des Körpers sich zu einem Winkel von 360° summieren.

3. Verfahren nach Anspruch 1, **dadurch gekennzeichnet, dass** die im Körper (2) des Kreissägeblattes (1, 1') ausgebildeten Nuten (8a, 8b; 12a, 12b) in der Flächendraufsicht die Form von Ringen und/oder Ringfragmenten haben, die konzentrisch zum Kreissägeblatt (1, 1') sind.

4. Verfahren nach Anspruch 1, **dadurch gekennzeichnet, dass** die im Körper (2) des Kreissägeblattes (1, 1') ausgebildeten Nuten (9a, 9b) in der Flächendraufsicht die Form von Ringabschnitten haben, die nicht konzentrisch zum Kreissägeblatt sind.

5. Verfahren nach Anspruch 1, **dadurch gekennzeichnet, dass** die im Körper (2) des Kreissägeblattes (1, 1') ausgebildeten Nuten (6a, 6b; 7a, 7b) in der Flächendraufsicht die Form von geraden Streifen haben, die sich entlang der Seiten mindestens eines Polygons erstrecken, dessen Mittelpunkt mit dem Mittelpunkt des Kreissägeblattes (1, 1') zusammenfällt.

6. Verfahren nach einem der Ansprüche 1 bis 5, **dadurch gekennzeichnet, dass** die Nuten (4a, 4b; 5a, 5b; 6a, 6b; 7a, 7b; 8a, 8b; 9a, 9b; 10a, 10b; 12a, 12b) in dem Bereich des Körpers (2) des Kreissägeblattes (1, 1') ausgebildet sind, der zwischen dem 0,5- und 0,8-fachen seines Radius liegt.

7. Verfahren nach Anspruch 1, **dadurch gekennzeichnet, dass** die Nuten mit einer Tiefe (g) ausgebildet sind, die etwa der Hälfte der Dicke (t) des Körpers (2) gleicht.

8. Verfahren nach Anspruch 1 oder 4 oder 5, **dadurch gekennzeichnet, dass** die benachbarten, mit Nuten versehenen Winkelabschnitte (I, II, III, IV, VI, VII, VIII), die die Nuten (9a, 9b) oder die Nuten (6a, 6b; 7a, 7b) enthalten, sich in den Winkelbereichen überlappen, die einen Winkel von mindestens 3° bedecken.

9. Kreissägeblatt, das einen Körper mit umfangseitigen Schneidzähnen enthält, wobei der Körper (2) des Kreissägeblattes (1, 1') Nuten (4a, 4b; 5a, 5b; 6a, 6b; 7a, 7b; 8a, 8b; 9a, 9b; 10a, 10b; 12a, 12b) enthält, die eine im Wesentlichen rechteckige Querschnittsform aufweisen und eine Tiefe (g) aufweisen, die kleiner als die Dicke (t) des Sägeblattkörpers (2) ist, und sich in einer von der radialen Richtung des Kreissägeblattes verschiedenen Richtung erstrecken, wobei die Nuten in gleichmäßig verteilten, mit Nuten versehenen Winkelabschnitten (I, II, III, IV, VI, VII, VIII) enthalten sind, die mindestens einen Teil jeder Fläche des Körpers bedecken, wobei in den mit Nuten versehenen Abschnitten jeder radiale Querschnitt (A-A) des Körpers mindestens zwei Nuten (4a, 4b; 5a, 5b; 6a, 6b; 7a, 7b; 8a, 8b; 9a, 9b; 10a, 10b; 12a, 12b) enthält, wobei jede der beiden Nuten auf einer anderen Seite des Körpers angeordnet ist, sodass jede Nut (4a, 4b; 5a, 5b; 6a, 6b; 7a, 7b; 8a, 8b; 9a, 9b; 10a, 10b; 12a, 12b) auf einer Seite in einem Teil des Körpers (2) angeordnet ist, der frei von den Nuten auf der gegenüberliegenden Seite des Körpers ist,
**dadurch gekennzeichnet, dass**
der Abstand ($t_2$) zwischen den Rändern der benachbarten Nuten, die auf den gegenüberliegenden Seiten des Körpers angeordnet sind, nicht kleiner ist als die Abmessung ($t_1$), die gleich der Dicke (t) des Körpers (2) minus der Tiefe (g) der Nut ist.

10. Kreissägeblatt nach Anspruch 9, **dadurch gekennzeichnet, dass** die mit Nuten versehenen Winkelabschnitte auf derselben Seite des Körpers sich zu einem Winkel von 360° summieren.

11. Kreissägeblatt nach Anspruch 9, **dadurch gekennzeichnet, dass** der Körper (2) des Kreissägeblattes (1, 1') die Nuten (8a, 8b; 12a, 12b) enthält, die in der Flächendraufsicht die Form von Ringen und/oder Ringabschnitten haben, die konzentrisch zum Sägeblatt (1, 1') sind.

12. Kreissägeblatt nach Anspruch 9, **dadurch gekennzeichnet, dass** der Körper (2) des Kreissägeblattes (1, 1') die Nuten (9a, 9b) enthält, die in der Flächendraufsicht die Form von Ringabschnitten haben, die nicht konzentrisch zum Sägeblatt sind.

13. Kreissägeblatt nach Anspruch 9, **dadurch gekennzeichnet, dass** der Körper (2) des Kreissägeblattes (1, 1') die Nuten (6a, 6b; 7a, 7b) enthält, die in der Flächendraufsicht die Form von geraden Streifen haben, die sich entlang der Seiten mindestens eines Polygons erstrecken, dessen Mittelpunkt mit dem Mittelpunkt des Kreissägeblattes (1, 1') zusammenfällt.

14. Kreissägeblatt nach einem der Ansprüche 9 bis 13, **dadurch gekennzeichnet, dass** die Nuten (4a, 4b; 5a, 5b; 6a, 6b; 7a, 7b; 8a, 8b; 9a, 9b; 10a, 10b; 12a, 12b) in einem Bereich des Körpers (2) des Kreissägeblattes (1, 1') ausgebildet sind, der zwischen dem 0,5- und 0,8-fachen seines Radius (C) liegt.

15. Kreissägeblatt nach Anspruch 9, **dadurch gekennzeichnet, dass** die Tiefe (g) der Nuten etwa der Hälfte der Dicke (t) des Körpers (2) gleicht.

16. Kreissägeblatt nach Anspruch 9 oder 12 oder 13, **dadurch gekennzeichnet, dass** die benachbarten, mit Nuten versehenen Winkelabschnitte (I, II, III, IV, VI, VII, VIII), die die Nuten (9a, 9b) oder die Nuten (6a, 6b; 7a, 7b) enthalten, sich in den Winkelbereichen überlappen, die einen Winkel von mindestens 3° bedecken.

**Revendications**

1. Procédé de fabrication d'une lame de scie circulaire, la lame de scie circulaire comprenant un corps ayant des dents de coupe circonférentielles, le procédé comprenant le rainurage du corps de la lame de scie, dans lequel des rainures (4a, 4b ; 5a, 5b ; 6a, 6b ; 7a, 7b ; 8a, 8b ; 9a, 9b ; 10a, 10b ; 12a, 12b) sont formées sur les deux côtés du corps (2), lesdites rainures ayant une forme de section transversale sensiblement rectangulaire, et dans lequel lesdites rainures ont une profondeur (g) inférieure à l'épaisseur (t) du corps (2) de la lame de scie et s'étendent dans une direction différente de la direction radiale de la lame de scie circulaire, lesdites rainures étant comprises dans des sections angulaires rainurées (I, II, III, IV, VI, VII, VIII) uniformément réparties qui couvrent au moins une partie de chaque surface du corps, dans lesquelles sections rainurées chaque section transversale radiale (A-A) du corps comprend au moins deux rainures (4a, 4b ; 5a, 5b ; 6a, 6b ; 7a, 7b ; 8a, 8b ; 9a, 9b ; 10a, 10b ; 12a, 12b), chacune desdites deux rainures étant située sur un côté différent du corps, de sorte que chaque rainure (4a, 4b ; 5a, 5b ; 6a, 6b ; 7a, 7b ; 8a, 8b ; 9a, 9b ; 10a, 10b ; 12a, 12b) d'un côté est située dans une partie du corps (2) qui est dépourvue de rainures sur le côté opposé du corps,

   **caractérisé en ce que**

   la distance ($t_2$) entre les bords des rainures voisines situées sur les côtés opposés du corps n'est pas inférieure à la dimension ($t_1$) qui est égale à l'épaisseur (t) du corps (2) diminuée par la profondeur (g) de la rainure.

2. Procédé selon la revendication 1, **caractérisé en ce que** les sections angulaires rainurées formées sur le même côté du corps s'additionnent pour former un angle de 360°.

3. Procédé selon la revendication 1, **caractérisé en ce que** les rainures (8a, 8b ; 12a, 12b) formées dans le corps (2) de la lame de scie circulaire (1, 1') ont, dans une vue en plan de surface, la forme d'anneaux et/ou de fragments d'anneaux concentriques à la lame de scie circulaire (1, 1').

4. Procédé selon la revendication 1, **caractérisé en ce que** les rainures (9a, 9b) formées dans le corps (2) de la lame de scie circulaire (1, 1') ont, dans une vue en plan de surface, la forme des sections d'anneaux non concentriques à la lame de scie circulaire.

5. Procédé selon la revendication 1, **caractérisé en ce que** les rainures (6a, 6b ; 7a, 7b) formées dans le corps (2) de la lame de scie circulaire (1, 1') ont, dans une vue en plan de surface, la forme de bandes droites s'étendant le long des côtés d'au moins un polygone dont le centre coïncide avec le centre de la lame de scie circulaire (1, 1').

6. Procédé selon l'une quelconque des revendications 1 à 5, **caractérisé en ce que** les rainures (4a, 4b ; 5a, 5b ; 6a, 6b ; 7a, 7b ; 8a, 8b ; 9a, 9b ; 10a, 10b ; 12a, 12b) sont formées sur la zone du corps (2) de la lame de scie circulaire (1, 1') qui est située entre 0,5 et 0,8 de son rayon.

7. Procédé selon la revendication 1, **caractérisé en ce que** les rainures sont formées avec une profondeur (g) égale à environ la moitié de l'épaisseur (t) du corps (2).

8. Procédé selon la revendication 1 ou 4, ou 5, **caractérisé en ce que** les sections angulaires rainurées voisines (I, II, III, IV, VI, VII, VIII) comprenant les rainures (9a, 9b) ou les rainures (6a, 6b ; 7a, 7b) se chevauchent sur les zones angulaires sous un angle d'au moins 3°.

9. Lame de scie circulaire comprenant un corps muni de dents de coupe circonférentielles, dans laquelle le corps (2) de la lame de scie circulaire (1, 1') comprend des rainures (4a, 4b; 5a, 5b ; 6a, 6b ; 7a, 7b ; 8a, 8b ; 9a, 9b ; 10a, 10b ; 12a, 12b) ayant une forme de section transversale sensiblement rectangulaire et ayant une profondeur (g) inférieure à l'épaisseur (t) du corps (2) de la lame de scie et s'étendant dans une direction différente de la direction radiale de la lame de scie circulaire, lesdites rainures étant comprises dans des sections angulaires rainurées (I, II, III, IV, VI, VII, VIII) uniformément réparties qui couvrent au moins une partie de chaque surface du corps, dans lesquelles sections rainurées chaque section transversale radiale (A-A) du corps comprend au moins deux rainures (4a, 4b ; 5a, 5b ; 6a, 6b ; 7a, 7b ; 8a, 8b ; 9a, 9b ; 10a, 10b ; 12a, 12b), chacune desdites deux rainures étant située sur un côté différent du corps, de sorte que chaque rainure (4a, 4b ; 5a, 5b ; 6a, 6b ; 7a, 7b ; 8a, 8b ; 9a, 9b ; 10a, 10b ; 12a, 12b) d'un côté est située dans une partie du corps (2) qui est dépourvue de rainures sur le côté opposé du corps,

   **caractérisée en ce que**

   la distance ($t_2$) entre les bords des rainures voisines situées sur les côtés opposés du corps n'est pas inférieure à la dimension ($t_1$) qui est égale à l'épaisseur (t) du corps (2) diminuée par la profondeur (g) de la rainure.

**10.** Lame de scie circulaire selon la revendication 9, **caractérisé en ce que** les sections angulaires rainurées sur le même côté du corps s'additionnent pour former un angle de 360°.

**11.** Lame de scie circulaire selon la revendication 9, **caractérisée en ce que** le corps (2) de la lame de scie circulaire (1, 1') comprend les rainures (8a, 8b ; 12a, 12b) ayant, dans une vue en plan de surface, la forme d'anneaux et/ou de sections d'anneaux concentriques à la lame de scie (1, 1').

**12.** Lame de scie circulaire selon la revendication 9, **caractérisée en ce que** le corps (2) de la lame de scie circulaire (1, 1') comprend les rainures (9a, 9b) ayant, dans une vue en plan de surface, la forme de sections d'anneaux non concentriques à la lame de scie.

**13.** Lame de scie circulaire selon la revendication 9, **caractérisée en ce que** le corps (2) de la lame de scie circulaire (1, 1') comprend les rainures (6a, 6b ; 7a, 7b) ayant, dans une vue en plan de surface, la forme de bandes droites s'étendant le long des côtés d'au moins un polygone dont le centre coïncide avec le centre de la lame de scie circulaire (1, 1').

**14.** Lame de scie circulaire selon l'une quelconque des revendications 9 à 13, **caractérisée en ce que** les rainures (4a, 4b ; 5a, 5b ; 6a, 6b ; 7a, 7b ; 8a, 8b ; 9a, 9b ; 10a, 10b ; 12a, 12b) sont formées sur une zone du corps (2) de la lame de scie circulaire (1, 1') qui est située entre 0,5 et 0,8 de son rayon (C).

**15.** Lame de scie circulaire selon la revendication 9, **caractérisée en ce que** la profondeur (g) des rainures est égale à environ la moitié de l'épaisseur (t) du corps (2).

**16.** Lame de scie circulaire selon la revendication 9 ou 12, ou 13, **caractérisée en ce que** les sections angulaires rainurées voisines (I, II, III, IV, VI, VII, VIII) comprenant les rainures (9a, 9b) ou les rainures (6a, 6b ; 7a, 7b) se chevauchent sur les zones angulaires sous un angle d'au moins 3°.

Fig 1

Fig. 2

Fig. 3

Fig. 4

Fig. 5

Fig. 6

Fig. 7

Fig. 8

Fig. 9

Fig. 10

Fig. 11

Fig. 12

# D-D

Fig. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 2703825 A1